# EUROPÄISCHE PATENTSCHRIFT

(11) **EP 3 331 682 B1**
(45) Veröffentlichungstag und Bekanntmachung des Hinweises auf die Patenterteilung: **17.02.2021**
(21) Anmeldenummer: 16766835.9
(22) Anmeldetag: 29.07.2016
(51) Int. Cl.: B29C 44/42, C08L 83/04, C08J 9/32

(54) **VERWENDUNG VON FLÜSSIG- ODER FESTSTOFFSILIKON ALS MATERIAL ZUR VERARBEITUNG IM SPRITZGUSSVERFAHREN**
USE OF LIQUID OR SOLID SILICONE RUBBER AS A MATERIAL TO BE MOULDED IN AN INJECTION MOULDING PROCESS
UTILISATION DE SILICONE LIQUIDE OU SOLIDE COMME MATÉRIAU À MOULER DANS UN PROCÉDÉ DE MOULAGE PAR INJECTION

(30) Priorität: 07.08.2015 DE 102015010380
(43) Veröffentlichungstag der Anmeldung: 13.06.2018
(73) Patentinhaber: Universität Kassel, 34125 Kassel (DE)
(72) Erfinder: BOGEDALE, Lucas, 10437 Berlin (DE); GIESEN, Ralf Urs, 34323 Malsfeld (DE); HEIM, Hans-Peter, 33332 Gütersloh (DE)
(74) Vertreter: Patentanwälte Walther Hinz Bayer PartGmbB
(86) Internationale Anmeldenummer: PCT/DE2016/100349
(87) Internationale Veröffentlichungsnummer: WO 2017/025083

(56) Entgegenhaltungen:
- WO-A1-2014/120117
- DE-A1-102009 044 299
- DE-A1-102010 017 305
- JP-A- S61 243 836
- US-A1- 2008 200 609
- DATABASE WPI Week 198650 Thomson Scientific, London, GB; AN 1986-328417 XP002763077, & JP S61 243836 A (YAMAUCHI RUBBER IND CO LTD) 30. Oktober 1986 (1986-10-30)

## Beschreibung

Die Erfindung betrifft die Verwendung von Flüssig- oder Feststoffsilikon mit Mikrosphären als Material zur Verarbeitung im Spritzgussverfahren. Flüssig- oder Feststoffsilikone sind aus dem Stand der Technik hinreichend bekannt. Aus solchen Silikonen werden häufig Teile produziert, die eine hohe Temperaturbeständigkeit aufweisen, oder auch UV-beständig sein müssen. Nachteilig an Silikonwerkstoffen ist allerdings der hohe Preis. Allerdings sind die Einsatzmöglichkeiten für Silikon vielfältig, weshalb man bestrebt ist, die Kosten für den Einsatz von Silikon für die Herstellung der verschiedensten Teile zu vermindern.

Bekannt ist aus dem Stand der Technik gemäß der EP 1 749 644 A1 ein Verfahren zur Herstellung von Kunststoffteilen, und hier insbesondere Kunststoffprofilen, bei denen Pulver oder Füllstoffe in ein granulatförmiges thermoplastisches Kohlenstoffmaterial eingebracht werden, diese Mischung erwärmt wird, und in Kunststoffteile geformt wird. Das thermoplastische Kohlenstoffmaterial ist verhältnismäßig teuer, weshalb man bestrebt ist, den Anteil an thermoplastischem Kohlenstoffmaterial in Bezug auf das jeweilige Werkstück zu reduzieren. Zu diesem Zweck ist der Einsatz von Füllstoffen bekannt, und hier insbesondere der Einsatz von sogenannten Mikrosphären. Mikrosphären sind aus dem Stand der Technik hinreichend bekannt, und beispielsweise bei "AkzoNobel" unter der Bezeichnung "Expancel®" Mikrosphären käuflich zu erwerben. Bei solchen Mikrosphären handelt es sich um sphärische Kunststoffkugeln, die aus einer Polymerhülle bestehen, in die ein Gas eingekapselt ist. Durch Erwärmung erhöht sich der Gasdruck im Inneren der Hülle, die gleichzeitig aufgrund der Wärme aufweicht, was zu einer Volumenvergrößerung solcher Mikrosphären führt. Das Treibgas bleibt hierbei allerdings dauerhaft eingeschlossen. Aus der bereits zuvor genannten EP 1 749 644 A1 ist nun bekannt, ein Gemisch aus thermoplastischem Kohlenstoffmaterial und dem zuvor beschriebenen Mikrosphären im Spritzgussverfahren zu verarbeiten. Beim Spritzgussverfahren wird das Gemisch aus thermoplastischem Kohlenstoffmaterial und dem Füllstoff in Form von Mikrosphären durch eine Plastifiziereinheit durch eine Düse in eine Werkstückform gegeben. Die EP 1 749 644 geht nun davon aus, dass die Mikrosphären bereits innerhalb der Plastifiziereinheit aufgrund der dort herrschenden Temperaturen ihr Volumen vergrößern bzw. sogar in Bezug auf die Teilchengröße den vorgesehenen Endzustand erreichen. Ähnliches wird auch in Bezug auf die Herstellung von Kunststoffteilen im Extrusionsverfahren beschrieben. Das heißt zusammengefasst, dass man bei der Abfassung der EP 1 749 644 A1 davon ausgegangen ist, dass die Mikrosphären bereits in der Plastifiziereinheit bzw. dem Extruder expandieren sollen.

In der EP 0 186 493 B1 ist die Herstellung eines Kautschukverbundmaterials als Stoßdämpferwerkstoff beschrieben, wobei ein Gemisch aus Silikonkautschuk und Mikrosphären vorgesehen ist, wobei die Mikrosphären bereits im expandierten Zustand dem Silikonkautschuk vor der weiteren Verarbeitung, insbesondere in der nachfolgenden Vulkanisation, beigemischt werden.

Aus der DE10 2010 017 305 A1 ist die Herstellung eines Isolationsmaterials mit guten Isolationseigenschaften bekannt, wobei das Isolationsmaterial eine geschlossene Porenstruktur durch die Verwendung von vorexpandierten Mikrokugeln aufweist.

Die EP 2 842 992 A1 betriff ein Isolationsmaterial, das kostengünstig durch eine Dichtereduzierung durch den Einsatz von Mikrosphären herstellbar ist.

Die DE 10 2006 042 687 A1 befasst sich mit der Herstellung eines Silikonschaums, dem metallische Zusätze zugegeben werden, um durch Mikrowellen Wärme zu erzeugen.

Aus der DE 10 2009 044 299 A1 ist die Verarbeitung einer Silikonkautschukmischung mit Mikrosphären durch Kalandrieren bekannt.

Aus der DE 10 2007 007 569 A1 (US 2008/200609 A1) ist bekannt, in ein Silikongemisch unter anderem expandierbare Hohlkörper einzubringen und dieses Gemisch etwa im Spritzgussverfahren weiterzuverarbeiten. Die erhaltenen Vulkanisate zeichnen sich durch geringe Reibungskoeffizienten aus.

Die WO 2014/120117 A1 beschreibt die Beschichtung eines Substrats mit einem Silikonkautschuk enthaltend Mikrosphären im Spritzgussverfahren.

Die JP S61 243836 A beschreibt die Herstellung von Walzen aus Silikonkautschuk, der unter Verwendung expandierbarer Mikrosphären geschäumt wird.

Gegenstand der Erfindung ist nun die Verwendung von Flüssig- oder Feststoffsilikon als Material zur Verarbeitung im Spritzgussverfahren.

Der Flüssig- oder Feststoffsilikon wird häufig zur Weiterverarbeitung zu Silikonformteilen spritzgegossen.

Die der Erfindung zugrunde liegende Aufgabe besteht nun darin, einen Flüssig- oder Feststoffsilikon im unvulkanisierten Zustand bereitzustellen, der die Herstellung von preiswerten Bauteilen erlaubt, und der dennoch gut weiterverarbeitbar ist.

Zur Lösung der Aufgabe dienen die Merkmale des kennzeichnenden Teils des Anspruchs 1 in Verbindung mit den Merkmalen des Oberbegriffs. Hierbei wird erfindungsgemäß vorgeschlagen, dass dem Flüssig- oder Feststoffsilikon vor Einspritzen des Flüssig- oder Feststoffsilikons in die Werkstückform unter Wärme expandierbare Mikrosphären mit einer sphärischen Kunststoffhülle, in der ein Treibgas eingekapselt ist, zugegeben werden. Vor dem Einspritzvorgang in die Werkstückform wird das Gemisch aus Flüssig- oder Feststoffsilikon und unter Wärme expandierbaren Mikrosphären unterhalb der Vulkanisationstemperatur und unterhalb der Expansionstemperatur der Mikrosphären gehalten, wobei nach dem untervolumetrischen Einspritzen des Gemisches in die Werkstückform eine Erwärmung des Gemisches auf die Vulkanisationstemperatur des Flüssig- oder Feststoffsilikons erfolgt.

Die Vulkanisationszeit und Vulkanisationstemperatur des Flüssig- oder Feststoffsilikons sind auf die Expansionstemperatur und Expansionszeit der Mikrosphären abgestimmt, so dass die Expansion der Mikrosphären und damit die Erhöhung des Porenvolumens bzw. die Reduzierung der Dichte des Gemisches erst in der Werkzeugform stattfindet. Hieraus folgt unmittelbar, dass eine Weiterverarbeitung eines solchen Gemisches aus Flüssig- oder Feststoffsilikon mit solchen Mikrosphären problemlos im Spritzgussverfahren möglich ist, da die Mikrosphären aufgrund ihres Durchmessers von 10 bis 40 µm keinerlei Einfluss auf die Weiterverarbeitung haben.

Die Mikrosphären, also der unter erhöhter Temperatur expandierbare Füllstoff, umfassen eine sphärische Kunststoffhülle, in der ein Treibgas eingekapselt ist, wobei bei entsprechender Wärmezufuhr und entsprechender Zeitdauer eine Vergrößerung des Volumens um das 40- bis 50-fache erfolgen kann.

Hierbei befindet sich das Material der Kunststoffhülle bei Vulkanisationstemperatur des Flüssig- oder Feststoffsilikons im thermoelastischen Bereich und ist unter Einfluss des Treibgases bei der Vulkanisationstemperatur dehnbar. Das heißt, die Mikrosphären vergrößern ihr Volumen.

Durch die erfindungsgemäße Lehre wird deutlich, dass in der Plastifiziereinheit der Spritzgussmaschine die Mikrosphären noch nicht expandieren. Die Expansion der Mikrosphären und damit die Erhöhung des Porenvolumens bzw. Reduzierung der Dichte des Gemisches findet erst in der Werkstückform statt. Dies hat allerdings den großen Vorteil, dass der Expansion der Mikrosphären in der Werkstückform im Prinzip keine Grenzen gesetzt sind. Das Volumen der Mikrosphären kann hierbei um das 40- bis 50-fache in der Werkstückform zunehmen. Erfindungsgemäß ist vorgesehen, dass das Gemisch aus Flüssig- oder Feststoffsilikon untervolumetrisch in die Werkzeugform eingespritzt wird, wobei der Füllgrad der Werkstückform bevorzugt bei 50 bis 90 % liegt. Der Vorteil der beschriebenen Vorgehensweise besteht darin, dass eine Beschädigung der Mikrosphären bei der Verarbeitung in der Plastifiziereinheit nahezu ausgeschlossen ist. Dies im Gegensatz dazu, wenn die Mikrosphären bereits im expandierten Zustand in die Plastifiziereinheiten eingebracht würden, da dann die Gefahr besteht, dass die Mikrosphären im expandierten Zustand in der Plastifiziereinheit Schaden nehmen. Dies gilt nicht nur während der Verweilzeit der Mikrosphären in der eigentlichen Plastifiziereinheit, sondern insbesondere auch bei Durchtritt durch die Düse an der Spitze der Plastifiziereinheit in die Werkstückform. Denn die Düse hat einen Durchmesser von etwa 400 µm, was den Durchtritt von voll expandierten Mikrosphären durch die Düse behindert und zur Beschädigung der Mikrosphären führen kann.

Nun ist es allerdings durchaus so, dass man bestrebt ist, den Anteil an hochvolumigen Mikrosphären in dem Endprodukt, z. B. im Bauteil oder Werkstück, zu erhöhen. Denn es hat sich herausgestellt, dass mit der Erhöhung der Volumengröße der Mikrosphären in dem Werkstück eine Verbesserung der Elastizität, insbesondere in Hinblick auf einen geringeren Druckverformungsrest und eine höhere Rückprallelastizität einhergeht.

Die Verbesserung der Elastizität ist somit bei der Verarbeitung von Flüssig- oder Feststoffsilikon im Spritzgussverfahren nur möglich, wenn die Expansion der Mikrosphären in dem Flüssig- oder Feststoffsilikon erst in der Werkstückform stattfindet, und nicht bereits in der Plastifiziereinheit, weil das Einmischen von bereits expandierten Mikrosphären zu einer Steigerung der Viskosität des Materials führt und damit zu höheren Scherkräften bei der Verarbeitung. Um eine Schädigung der Mikrosphären bei der Verarbeitung zu verhindern, kann nur ein geringer Anteil an bereits expandierten Mikrosphären in den Flüssig- oder Feststoffsilikon eingearbeitet werden.

Durch die Verwendung von expandierbaren Mikrosphären lässt sich ein größerer Anteil an Füllstoff in den Flüssig- oder Feststoffsilikon einmischen, damit kann eine Verbesserung der Elastizität und eine signifikante Reduzierung der Dichte erreicht werden.

## Patentansprüche

1. Verwendung von Flüssig- oder Feststoffsilikon als Material zur Verarbeitung im Spritzgussverfahren,
**dadurch gekennzeichnet,**
**dass** dem Flüssig- oder Feststoffsilikon vor Einspritzen des Flüssig- oder Feststoffsilikons in die Werkstückform unter Wärme expandierbare Mikrosphären mit einer sphärischen Kunststoffhülle, in der ein Treibgas eingekapselt ist, zugegeben werden, wobei vor dem Einspritzvorgang in die Werkstückform das Gemisch aus Flüssig- oder Feststoffsilikon und unter Wärme expandierbaren Mikrosphären unterhalb der Vulkanisationstemperatur und unterhalb der Expansionstemperatur der Mikrosphären gehalten wird, wobei nach dem untervolumetrischen Einspritzen des Gemisches in die Werkstückform eine Erwärmung des Gemisches auf die Vulkanisationstemperatur des Flüssig- oder Feststoffsilikons erfolgt, wobei die Vulkanisationszeit und Vulkanisationstemperatur des Flüssig- oder Feststoffsilikons auf die Expansionstemperatur und Expansionszeit der Mikrosphären abgestimmt sind, so dass die Expansion der Mikrosphären und damit die Erhöhung des Porenvolumens bzw. die Reduzierung der Dichte des Gemisches erst in der Werkzeugform stattfindet.

2. Verwendung von Flüssig- oder Feststoffsilikon als Material zur Verarbeitung im Spritzgussverfahren nach Anspruch 1,
**dadurch gekennzeichnet,**
**dass** der Füllgrad an dem Gemisch aus Flüssig- oder Feststoffsilikon und den Mikrosphären in der Werkstückform zwischen 50 und 90 % beträgt.

## Claims

1. Use of liquid or solid silicone rubber as a material for processing in an injection molding process,
**characterized in that**
expandable microspheres having a spherical plastic sheath in which a propellant is encapsulated are added to the liquid or solid silicone rubber before the injection of the liquid or solid silicone rubber into the workpiece mold, with the mixture of liquid or solid silicone rubber and microspheres expandable under heat being maintained beneath the vulcanization temperature and beneath the expansion temperature of the microspheres before the injection process into the workpiece mold, with a heating of the mixture to the vulcanization temperature of the liquid or solid silicone rubber taking place after the sub-volumetric injection of the mixture into the workpiece mold, and with the vulcanization time and the vulcanization temperature of the liquid or solid silicone rubber being coordinated with the expansion temperature and the expansion time of the microspheres such that the expansion of the microspheres and thus the increase of the pore volume or the reduction of the density of the mixture only takes place in the workpiece mold.

2. Use of liquid or solid silicone rubber as a material for processing in an injection molding process,
**characterized in that**
the degree of filling in the mixture of liquid or solid silicone rubber and the microspheres in the workpiece mold amounts to between 50 and 90%.

## Revendications

1. Utilisation de silicone liquide ou solide comme matériau à mouler dans un procédé de moulage par injection,
**caractérisée en ce que**,
avant l'injection du silicone liquide ou solide dans le moule de la pièce, des microsphères expansibles sous l'effet de la chaleur dotées d'une enveloppe en matière plastique sphérique, dans laquelle est encapsulé un gaz gonflant, sont ajoutées au silicone liquide ou solide, le mélange de silicone liquide ou solide et de microsphères expansibles sous l'effet de la chaleur étant maintenu, avant le processus d'injection dans le moule de la pièce, en dessous de la température de vulcanisation et en dessous de la température d'expansion des microsphères, un chauffage du mélange à la température de vulcanisation du silicone liquide ou solide étant effectué après l'injection du mélange dans un moindre volume dans le moule de la pièce, le temps de vulcanisation et la température de vulcanisation du silicone liquide ou solide concordant avec la température d'expansion et le temps d'expansion des microsphères de telle sorte que l'expansion des microsphères et ainsi l'augmentation du volume des pores ou la réduction de la densité du mélange a lieu seulement dans le moule de la pièce.

2. Utilisation de silicone liquide ou solide comme matériau à mouler dans un procédé de moulage par injection selon la revendication 1, **caractérisée en ce que**
le degré de remplissage du mélange de silicone liquide ou solide et de microsphères dans le moule de la pièce est compris entre 50 et 90 %.
